# FASCICULE DE BREVET EUROPEEN

(11) **EP 3 127 217 B1**
(45) Date de publication et mention de la délivrance du brevet: **09.12.2020**
(21) Numéro de dépôt: 15721768.8
(22) Date de dépôt: 01.04.2015
(51) Int. Cl.: H02K 1/30, H02K 11/00

(54) **MACHINE ELECTRIQUE TOURNANTE MUNIE DE MOYENS DE SUIVI AMELIORES DE LA POSITION ANGULAIRE DU ROTOR ET ENSEMBLE DE TRANSMISSION CORRESPONDANTS**
ELEKTRISCHE MASCHINE MIT VERBESSERTER VORRICHTUNG ZUR ÜBERWACHUNG DER WINKELPOSITION DES ROTORS UND ENTSPRECHENDE GETRIEBEANORDNUNG
ROTARY ELECTRIC MACHINE PROVIDED WITH IMPROVED MEANS OF MONITORING THE ANGULAR POSITION OF THE ROTOR AND CORRESPONDING TRANSMISSION ASSEMBLY

(30) Priorité: 04.04.2014 FR 1452994
(43) Date de publication de la demande: 08.02.2017
(73) Titulaire: Valeo Equipements Electriques Moteur, 94046 Créteil Cedex (FR)
(72) Inventeur: EL BARAKA, Khadija, 77700 Serris (FR); JUGOVIC, Svetislav, 91200 Athis-Mons (FR); LEBAS, Gilles, 80800 Villers Bretonneux (FR)
(74) Mandataire: Duprez, Richard
(86) Numéro de dépôt international: PCT/FR2015/050844
(87) Numéro de publication internationale: WO 2015/150702

(56) Documents cités:
- WO-A1-00/04339
- WO-A1-2011/072653
- FR-A1- 2 782 761
- FR-A1- 2 884 367
- US-A1- 2013 221 810

## Description

La présente invention porte sur une machine électrique tournante munie de moyens de suivi améliorés de la position angulaire du rotor, ainsi que sur les moyens de suivi de position et un ensemble de transmission correspondants.

L'invention trouve une application particulièrement avantageuse avec les alternateurs pour véhicules automobiles, ainsi qu'avec les machines électriques tournantes de type moteur ou alterno-démarreurs. La machine électrique pourra également appartenir à un ensemble de transmission comportant un embrayage associé à un volant amortisseur en relation avec le vilebrequin d'un moteur thermique, ainsi qu'un amortisseur de torsion en relation avec une entrée d'une boîte de vitesses de véhicule automobile.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur comme décrit dans le document EP0803962 ou d'un moteur électrique comme décrit dans le document EP0831580. La machine électrique comporte un boîtier portant le stator. Ce boîtier est configuré pour porter à rotation l'arbre par exemple par l'intermédiaire de roulements, tels que des roulements à billes et/ou à aiguilles.

Le rotor comporte un corps formé par un empilage de feuilles de tôles maintenues sous forme de paquet au moyen d'un système de fixation adapté, tel que des rivets traversant axialement le rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Le stator est constitué par un empilage de tôles minces formant une couronne, dont la face intérieure est pourvue d'encoches ouvertes vers l'intérieur recevant les bobinages des phases, généralement au nombre de trois. Dans les stators d'alternateurs de ce genre, les types de bobinages les plus couramment utilisés sont, d'une part, les bobinages dits "concentriques" constitués par des bobines fermées sur elles-mêmes qui sont enroulées autour des dents du stator, et d'autre part, les bobinages du type dit "ondulé", qui sont connus par exemple par le document FR2483702.

Par ailleurs, la machine comporte des moyens de suivi de la position du rotor afin de pouvoir commander la machine de manière adaptée. Ces moyens de suivi comprennent une cible annulaire magnétique montée sur un porte-cible solidaire en rotation de l'arbre de la machine, et au moins un capteur fixe de type à effet Hall disposé à proximité de la cible. Sous l'effet de la rotation de la cible conjointement avec l'arbre, le champ magnétique reçu par le capteur varie. Le capteur est relié à un dispositif électronique de gestion et de commande, et transmet à celui-ci des signaux fonction des champs magnétiques reçus, ce dispositif traitant lesdits signaux pour en déduire la position angulaire ainsi que la vitesse du rotor.

D'autres machines électriques comportant des moyens de suivi d'une position angulaire du rotor sont divulguées dans les document US2013/221810 et WO00/04339. Le document FR2884367 enseigne de monter la cible magnétique sur une périphérie externe d'un porte-cible lié en rotation avec un roulement de montage rotatif de l'arbre de la machine électrique. Toutefois, une telle réalisation est couteuse à réaliser en raison de l'opération de liaison entre le porte-cible et le roulement. De plus, la cible a tendance à se décoller du porte-cible du fait de l'expansion radiale de la cible engendrée par l'effet des forces centrifuge.

L'invention vise à remédier efficacement à ces inconvénients en proposant une machine électrique tournante comportant:
- un rotor lié en rotation avec un arbre,
- un stator comportant un bobinage,
- un porte-capteur positionné autour d'un manchon issu d'un support de ladite machine électrique
   et
- des moyens de suivi d'une position angulaire dudit rotor comportant au moins un capteur ainsi qu'une cible magnétique fixée sur un porte-cible,
ledit porte-cible est monté sur ledit arbre et en ce que ladite cible magnétique est fixée sur une face interne dudit porte-cible tournée vers ledit arbre de ladite machine électrique
ledit rotor est monté sur un moyeu lié en rotation avec ledit arbre de la machine électrique,
ladite cible magnétique, ledit porte-cible et ledit capteur sont positionnés à l'intérieur dudit moyeu,
ledit manchon assure un maintien radial d'un roulement monté entre ledit manchon et ledit arbre de la machine électrique.

L'invention permet ainsi d'éviter l'expansion radiale de la cible magnétique qui est retenue par la face interne du porte-cible lors de la rotation du rotor. Un tel positionnement de la cible permet également au porte-cible d'isoler la cible des perturbations magnétiques et de la protéger de la pollution due à l'environnement de la machine. En outre, l'invention permet de réaliser le porte-cible à coût réduit par rapport à la réalisation de l'état de l'art dans laquelle le porte-cible est intégré au roulement de l'arbre.

Selon une réalisation, lesdits moyens de suivi comportent trois capteurs.

Selon une réalisation, ledit porte-cible présente une forme de coupelle.

Selon une réalisation, ledit porte-cible est formé à partir d'une tôle emboutie.

Selon l'invention, ledit rotor est monté sur un moyeu lié en rotation avec ledit arbre de la machine électrique, ladite cible magnétique, ledit porte-cible et ledit capteur étant positionnés à l'intérieur dudit moyeu.

Cela permet d'améliorer encore la protection des capteurs vis-à-vis des émissions électromagnétiques en provenance du rotor et du stator de la machine électrique.

Selon une réalisation, ledit porte-capteur présente un diamètre interne sensiblement égal à un diamètre externe dudit manchon.

Selon l'invention, ledit manchon assure un maintien radial d'un roulement monté entre ledit manchon et ledit arbre de la machine électrique. Le montage peut ainsi être réalisé en réduisant au maximum les jeux de montage du fait de la co-axialité des différents éléments assemblés à savoir l'arbre, le roulement, le support, et le porte-capteur.

Selon une réalisation, ledit porte-capteur est fixé sur une paroi transversale dudit support.

Selon une réalisation, ledit porte-capteur de forme annulaire comporte des ouvertures oblongues réparties sur sa circonférence destinées à recevoir des moyens de fixation audit support. Cela permet d'assurer un positionnement angulaire sous contrôle du porte-cible sur le support.

Selon une réalisation, ledit porte-capteur présente une base en forme d'anneau radial munie d'au moins une portion faisant saillie par rapport à la base intégrant ledit capteur.

Selon une réalisation, ledit capteur est positionné en regard de la face interne du porte-cible sur laquelle est fixée la cible magnétique.

L'invention a également pour objet des moyens de suivi d'une position angulaire d'un rotor de machine électrique tournante, caractérisés en ce qu'ils comportent une cible et un porte-cible, ladite cible magnétique étant fixée sur une face interne dudit porte-cible tournée vers l'intérieur dudit porte-cible.

Selon une réalisation, ledit porte-cible présente une forme de coupelle.

Selon une réalisation, ledit porte-cible est formé à partir d'une tôle emboutie.

L'invention porte également sur un ensemble de transmission comportant une machine électrique tournante telle que précédemment définie interposée entre d'une part un embrayage associé à un volant amortisseur en relation avec un vilebrequin de moteur thermique, et d'autre part un amortisseur de torsion en relation avec une entrée de boîte de vitesses d'un véhicule automobile.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale de la machine électrique tournante selon la présente invention;
La figure 2 montre une vue en perspective du porte-capteur monté dans la machine électrique selon la présente invention;
La figure 3 représente une vue en perspective du support de la machine électrique selon la présente invention sur lequel est fixé le porte-capteur de la figure 2;
La figure 4 est une vue détaillée de l'arbre de la machine électrique selon la présente invention sur lequel sont installés les moyens de suivi de la position angulaire du rotor;
Les figures 5a et 5b montrent respectivement des vues en perspective du porte-cible avant et après son montage sur l'arbre de la machine électrique selon la présente invention.

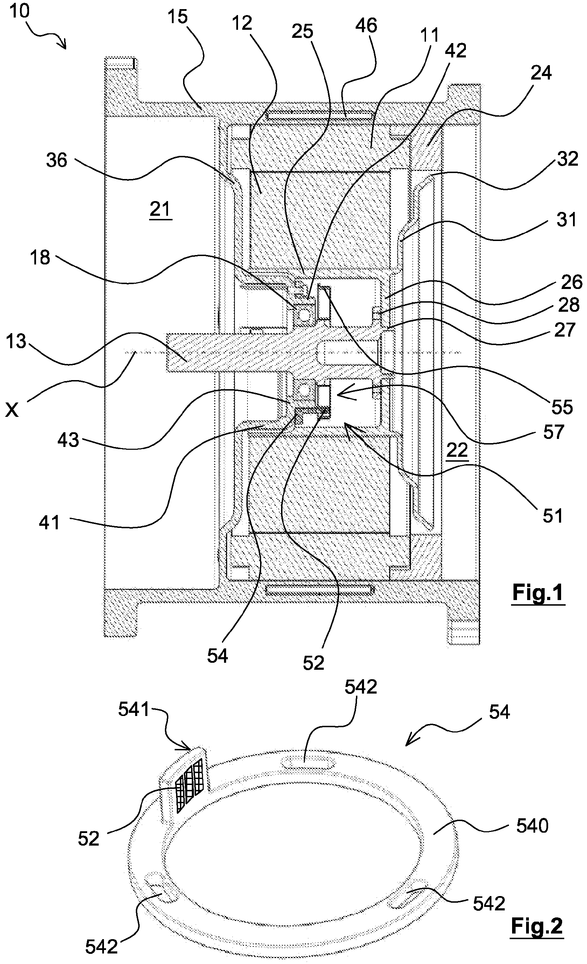

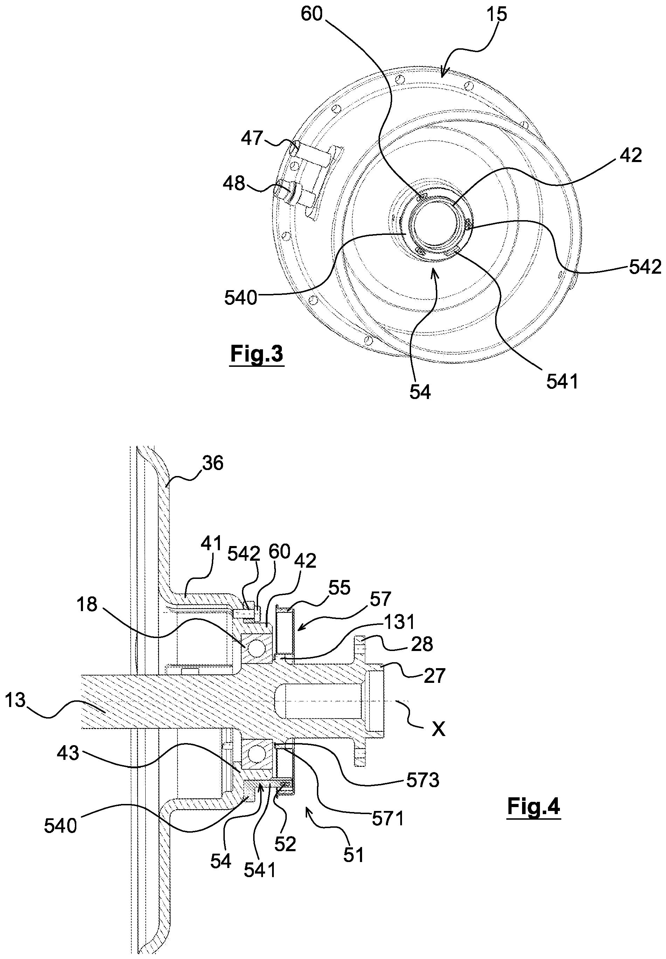

Dans la description qui suit les éléments identiques, similaires, ou analogues conservent la même référence d'une figure à l'autre. On utilisera une orientation axiale d'avant en arrière correspondant à une orientation de gauche à droite conformément aux figures 1 et 4.

La figure 1 représente une machine 10 comportant un stator 11 polyphasé entourant un rotor 12 d'axe X destiné à être monté sur un arbre 13. Le stator 11 est destiné à être porté par un support 15 configuré pour porter à rotation l'arbre 13 via un roulement à billes 18. Le stator 11 de la machine 10 entoure le rotor 12 avec présence d'un entrefer entre la périphérie interne du stator 11 et la périphérie externe du rotor 12.

Cette machine électrique 10 pourra appartenir à un ensemble de transmission comportant en outre un embrayage associé à un volant amortisseur en relation avec le vilebrequin d'un moteur thermique et un amortisseur de torsion en relation avec une entrée de boîte de vitesses du véhicule automobile.

L'embrayage associé au double volant amortisseur et l'amortisseur de torsion sont destinés à être positionnés aux extrémités de la machine 10 respectivement dans les espaces 21 et 22.

En l'occurrence, la machine 10 est une machine synchrone dont le rotor 12 est doté d'aimants permanents. Plus précisément, pour diminution des courants de Foucault, le rotor 12 comporte un corps sous la forme d'un paquet de tôles. Les aimants permanents pourront être implantés dans des ouvertures du paquet de tôles. Les aimants pourront être en terre rare ou en ferrite selon les applications et la puissance recherchée de la machine.

Par ailleurs, le stator 11 comporte un corps de forme annulaire d'axe confondu avec l'axe X. Ce corps présente des dents réparties régulièrement sur la périphérie interne délimitant deux à deux des encoches ouvertes vers l'intérieur. Le corps est formé par un empilement de tôles réalisées en matière ferromagnétique s'étendant dans un plan radial perpendiculaire à l'axe X. Le paquet de tôles est maintenu au moyen de rivets traversant axialement de part en part l'empilement des tôles.

On monte sur les dents les bobines préformées formant le bobinage du stator 11, en l'occurrence de type concentrique. Ces bobines sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail.

Les bobines sont interconnectées entre elles à l'aide d'un interconnecteur 24 comportant plusieurs cadres dont l'un est relié au neutre de la machine électrique 10, les autres cadres étant associés chacun à une phase de la machine électrique 10. Un tel stator 11 est décrit dans la demande de brevet FR12/55770 à laquelle on se reportera pour plus de précisions.

Le corps du rotor 12 est monté sur un moyeu 25. La périphérie interne du corps du rotor 12 est montée sur la périphérie externe du moyeu 25. Ce montage pourra être réalisé par frettage. En variante, la périphérie externe du moyeu 25 est moletée et le paquet de tôles du rotor 12 est emmanché à force sur le moletage du moyeu 25. Dans tous les cas, le corps du rotor 12 est solidaire axialement et en rotation du moyeu 25.

Plus précisément, le moyeu 25 du rotor 12 est fixé à une extrémité de l'arbre 13. Avantageusement, le moyeu 25 du rotor 12 présente du côté de son extrémité avant une épaisseur réduite. Ainsi, la pénétration à jeu radial d'un manchon 41 du support 15 à l'intérieur du moyeu 25 est possible.

Pour sa fixation, le moyeu 25 peut comporter un rebord interne 26 d'orientation sensiblement transversale. Ainsi, en fixant le rebord interne 26 à l'extrémité arrière de l'arbre 13, on fixe le moyeu 25. Pour sa fixation au rebord interne 26 du moyeu 25, l'arbre 13 présente à son extrémité arrière une portée de centrage 27 et une butée axiale 28 pour le rebord interne. Cette portée 27 et cette butée 28 permettent le positionnement du rebord interne 26 et donc du rotor 12. La butée axiale 28 et le rebord interne 26 sont troués pour le passage d'organe de fixation, par exemple des rivets, du rebord interne 26 avec l'arbre 13.

La machine 10 comporte en outre un flasque anti-poussière 31 permettant d'éviter la pénétration des particules issues notamment de l'amortisseur. Le flasque 31 est issu d'un prolongement à l'arrière du moyeu 25 du rotor 12. La périphérie externe du flasque 31 est décalée axialement vers l'arrière par rapport à la périphérie interne du flasque 31. Le flasque 31 présente en outre une extrémité inclinée 32 en direction opposée au rotor 12. Cette extrémité inclinée 32 est positionnée à l'intérieur de l'interconnecteur 24.

Par ailleurs, le support 15 pourra être métallique. Il pourra être en matière moulable en étant par exemple en aluminium ou en un alliage à base d'aluminium. Il est de préférence en matière amagnétique.

La périphérie externe du corps du stator 11 est montée à serrage dans le support 15 présentant une périphérie interne de forme cylindrique pour coopérer avec la périphérie externe du corps du stator 11. Le montage du corps du stator 11 dans le support 15 pourra être réalisé par frettage.

Comme cela est montré aux figures 1 et 4, le support 15 comporte un voile interne 36 formant une paroi de séparation entre le rotor 12 et l'espace 21 destiné à recevoir l'embrayage. Ce voile 36 est ainsi décalé axialement par rapport à la face avant du support 15. Ainsi, le voile interne 36 permet d'éviter l'arrivée des poussières de l'embrayage dans la machine électrique 10 susceptibles de perturber le fonctionnement de la machine 10. Ce voile interne 36 présente à son extrémité interne un premier 41 et un deuxième 42 manchon d'orientation axiale qui pénètrent à l'intérieure du rotor 12. Ces manchons 41, 42 sont traversés par l'arbre 13. Ces manchons 41, 42 présentent des diamètres différents. Le manchon 42 qui s'étend plus à l'intérieur du rotor 12 a un diamètre inférieur à celui du manchon 41. Ainsi, on peut monter le roulement à billes 18 entre le manchon interne 42 et l'arbre 13. Les deux manchons 41, 42 s'étendent axialement de part et d'autre d'un fond 43 constitué par une paroi transversale. Ce fond 43 est troué de manière à pouvoir être traversé par l'arbre 13.

De préférence, le support 15 comporte en outre un circuit de refroidissement 46 pour refroidir le stator 11. Pour cela, on réalise par moulage en sable une forme annulaire illustrée en coupe sur la figure 1, sur tout le tour du support 15 autour du stator 11. Le circuit de refroidissement 46 pourra comporter une entrée 47 et une sortie 48 ménagées dans le support 15 bien visibles à la figure 3.

L'extrémité avant de l'arbre 13 se monte dans le vilebrequin du moteur thermique, de manière connue, via un roulement pilote monté dans une cavité du vilebrequin. Avantageusement, l'arbre 13 s'étend en porte à faux à l'avant du module, ce qui simplifie le montage de l'ensemble sur le moteur thermique équipé du double volant amortisseur et de l'embrayage.

La machine électrique 10 comporte en outre des moyens de suivi 51 d'une position angulaire du rotor 12 visibles à la figure 1 et plus précisément à la figure 4. Ces moyens de suivi 51 comportent au moins un capteur 52 de type à effet Hall intégré à un porte-capteur 54 ainsi qu'une cible magnétique annulaire 55 fixée sur un porte-cible 57 solidaire en rotation de l'arbre 13. En l'occurrence, les moyens de suivis comportent trois capteurs 52.

Sous l'effet de la rotation du porte-cible 57 conjointement avec l'arbre 13, le champ magnétique reçu par le capteur 52 varie. Le capteur 52 est relié à un dispositif électronique de gestion et de commande (non représenté), et transmet à celui-ci des signaux fonction des champs magnétiques reçus, ce dispositif traitant lesdits signaux pour en déduire la position angulaire ainsi que la vitesse du rotor.

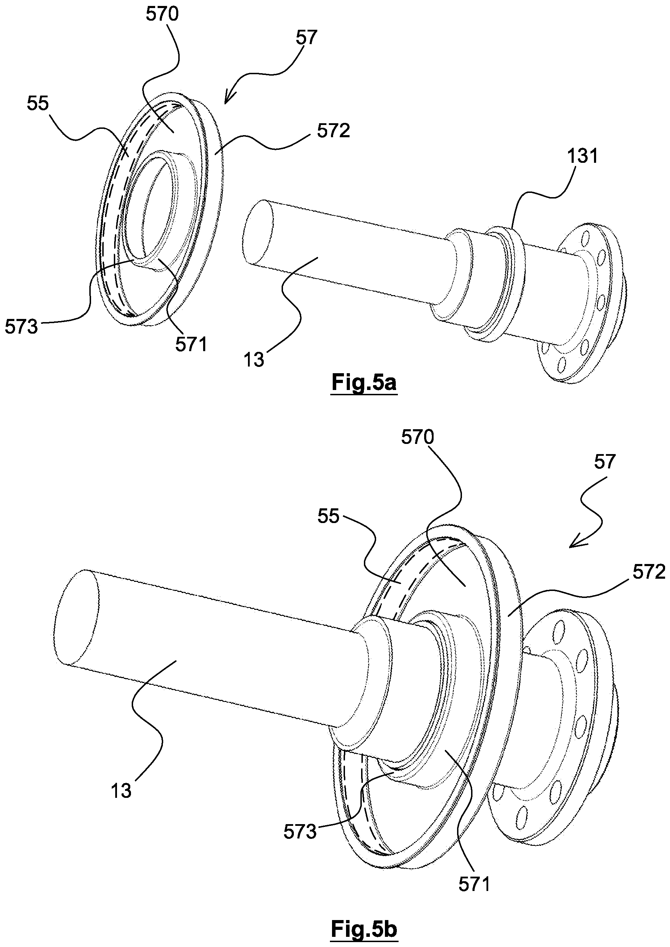

Plus précisément, comme on peut le voir aux figures 5a et 5b, le porte-cible 57 présente une forme de coupelle. La coupelle comporte un anneau 570 d'orientation radiale destiné à entourer coaxialement l'arbre 13. Cette coupelle présente à sa périphérie interne un premier rebord cylindrique 571 d'orientation axiale. Ce rebord 571 délimite un alésage autorisant le passage de l'arbre 13. En outre, la coupelle présente à sa périphérie externe un deuxième rebord cylindrique 572 d'orientation axiale. La cible magnétique 55 est fixée sur la face annulaire interne du deuxième rebord 572 tournée vers l'arbre 13. Le porte-cible 57 est formé à partir d'une tôle emboutie. La cible magnétique 55 est fixée sur une face interne du rebord externe 572 tournée vers l'arbre 13.

Le porte-cible 57 est de préférence monté par emmanchement sur l'arbre 13 comme cela est représenté aux figures 5a et 5b. A cet effet, le rebord interne 571 présente un diamètre interne sensiblement égal au diamètre externe d'un épaulement 131 de l'arbre 13. En outre, le rebord interne 571 présente un retour radial 573 dirigé vers l'intérieur du porte-cible 57 destiné à venir en appui contre une face radiale de l'épaulement 131 pour assurer un positionnement axial correct du porte-cible 57 sur l'arbre 13.

Par ailleurs, comme on peut le voir sur la figure 2, le porte-capteur 54 présente une base 540 en forme d'anneau radial munie d'une portion 541 faisant saillie par rapport à la base intégrant les trois capteurs 52 à effet Hall. Il est à noter qu'une réalisation des moyens de suivi 51 à trois capteurs 52 permet d'améliorer la précision et la fiabilité de la mesure de position effectuée par le dispositif. Les capteurs 52 sont noyés dans une même portion 541. En variante, les capteurs 52 sont intégrés dans des portions angulaires indépendantes espacées régulièrement entre elles. Les trois capteurs 52 sont destinés à être implantés radialement en dessous de la cible magnétique 55 avec définition d'un entrefer précis entre la périphérie externe de la portion 541 et la périphérie interne de la cible 55. Cet entrefer est obtenu grâce au centrage du porte-capteur 54 sur le manchon 42 issu du voile interne 36 (cf. figure 4).

A cet effet, la base 540 présente un diamètre interne sensiblement égal à un diamètre externe du manchon 42. Le diamètre externe de la base 540 est inférieur ou au plus égal au diamètre externe du manchon externe 41. Le montage peut ainsi être réalisé en réduisant au maximum les jeux de montage du fait de la co-axialité des différents éléments assemblés à savoir l'arbre 13, le roulement 18, le support 15, et le porte-capteur 54.

En outre, comme cela est illustré sur les figures 3 et 4, le porte-capteur 54 est fixé sur la paroi transversale 43 du support 15 s'étendant entre les deux manchons 41, 42. A cette fin, le porte-capteur 54 comporte des ouvertures 542 oblongues réparties sur une circonférence de la base 540 destinées à recevoir des moyens de fixation 60. Cela permet d'assurer un positionnement angulaire sous contrôle du porte-cible 57 sur le support 15. Ces moyens de fixation 60 sont en l'occurrence constitués par des vis mais pourrait en variante être constitués par des rivets ou tout autre moyen adapté. Alternativement, le porte-capteur 54 est collé sur la paroi transversale 43.

On note également que la cible magnétique 55, le porte-cible 57, le capteur 52 ainsi que le porte-capteur 54 sont positionné à l'intérieur du moyeu 25, en sorte que l'ensemble présente une configuration compacte. En outre, les moyens de suivi 51 sont isolés de l'environnement magnétique de la machine par le moyeu 25 qui en constitue une cage de protection avec le rebord interne 26 et le fond 43 situés en vis-à-vis.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Machine électrique tournante (10) comportant:
- un rotor (12) lié en rotation avec un arbre (13),
- un stator (11) comportant un bobinage,
- un porte-capteur (54) positionné autour d'un manchon (42) issu d'un support (15) de ladite machine électrique (10) et
- des moyens de suivi (51) d'une position angulaire dudit rotor (12) comportant au moins un capteur (52) ainsi qu'une cible magnétique (55) fixée sur un porte-cible (57),ledit porte-cible (57) est monté sur ledit arbre (13) et en ce que ladite cible magnétique (55) est fixée sur une face interne dudit porte-cible (57) tournée vers ledit arbre (13) de ladite machine électrique (10),
ledit rotor (12) est monté sur un moyeu (25) lié en rotation avec ledit arbre (13) de la machine électrique,
ladite cible magnétique (55), ledit porte-cible (57) et ledit capteur (52) sont positionnés à l'intérieur dudit moyeu (25),
**caractérisée en ce que** ledit manchon (42) assure un maintien radial d'un roulement (18) monté entre ledit manchon (42) et ledit arbre (13) de la machine électrique (10).

2. Machine électrique selon la revendication 1, **caractérisée en ce que** lesdits moyens de suivi (51) comportent trois capteurs (52).

3. Machine électrique selon la revendication 1 ou 2, **caractérisée en ce que** ledit porte-cible (57) présente une forme de coupelle.

4. Machine électrique selon l'une quelconque des revendications 1 à 3, **caractérisée en ce que** ledit porte-cible (57) est formé à partir d'une tôle emboutie.

5. Machine électrique selon la revendication 1, **caractérisée en ce que** ledit porte-capteur (54) présente un diamètre interne sensiblement égal à un diamètre externe dudit manchon (42).

6. Machine électrique selon la revendication 5 , **caractérisée en ce que** ledit porte-capteur (54) est fixé sur une paroi transversale (43) dudit support (15).

7. Machine électrique selon l'une quelconque des revendications précédentes, **caractérisée en ce que** ledit porte-capteur (54) de forme annulaire comporte des ouvertures (542) oblongues réparties sur sa circonférence destinées à recevoir des moyens de fixation (60) audit support (15).

8. Machine électrique selon l'une quelconque des revendications précédentes, **caractérisée en ce que** ledit porte-capteur (54) présente une base (540) en forme d'anneau radial munie d'au moins une portion (541) faisant saillie par rapport à la base (540) intégrant ledit capteur (52).

9. Machine électrique selon l'une quelconque des revendications précédentes, **caractérisée en ce que** ledit capteur (52) est positionné en regard de la face interne du porte-cible (57) sur laquelle est fixée la cible magnétique (55).

10. Ensemble de transmission comportant une machine électrique tournante (10) définie selon l'une quelconque des revendications 1 à 9 interposée entre d'une part un embrayage associé à un volant amortisseur en relation avec un vilebrequin de moteur thermique, et d'autre part un amortisseur de torsion en relation avec une entrée de boîte de vitesses d'un véhicule automobile.

## Patentansprüche

1. Drehende elektrische Maschine (10) aufweisend:
- einen Rotor (12), der mit einer Welle (13) drehbar verbunden ist,
- einen Stator (11), der eine Wicklung aufweist,
- einen Sensorträger (54), der um eine Muffe (42) aus einem Halter (15) der elektrischen Maschine (10) positioniert ist, und
- Mittel zur Verfolgung (51) einer Winkelposition des Rotors (12) aufweisend mindestens einen Sensor (52) sowie ein magnetisches Ziel (55), das auf einem Zielträger (57) befestigt ist, der Zielträger (57) auf der Welle (13) befestigt ist, und dadurch, dass das magnetische Ziel (55) auf einer Innenfläche des Zielträgers (57) befestigt ist, die zu der Welle (13) der elektrischen Maschine (10) gerichtet ist,
der Rotor (12) an einer Nabe (25) angebracht ist, die drehbar mit der Welle (13) der elektrischen Maschine verbunden ist,
das magnetische Ziel (55), der Zielträger (57) und der Sensor (52) innerhalb der Nabe (25) positioniert sind, **dadurch gekennzeichnet, dass** die Muffe (42) einen radialen Halt eines Lagers (18) gewährleistet, das zwischen der Muffe (42) und der Welle (13) der elektrischen Maschine (10) angebracht ist.

2. Elektrische Maschine nach Anspruch 1, **dadurch gekennzeichnet, dass** die Verfolgungsmittel (51) drei Sensoren (52) aufweisen.

3. Elektrische Maschine nach Anspruch 1 oder 2, **dadurch gekennzeichnet, dass** der Zielträger (57) eine Schalenform aufweist.

4. Elektrische Maschine nach einem der Ansprüche 1 bis 3, **dadurch gekennzeichnet, dass** der Zielträger (57) aus einem tiefgezogenen Blech gebildet ist.

5. Elektrische Maschine nach Anspruch 1, **dadurch gekennzeichnet, dass** der Zielträger (54) einen Innendurchmesser aufweist, der im Wesentlichen gleich einem Außendurchmesser der Muffe (42) ist.

6. Elektrische Maschine nach Anspruch 5, **dadurch gekennzeichnet, dass** der Zielträger (54) auf einer Querwand (43) des Halters (15) befestigt ist.

7. Elektrische Maschine nach einem der vorhergehenden Ansprüche, **dadurch gekennzeichnet, dass** der ringförmige Sensorträger (54) längliche Öffnungen (542) aufweist, die über seinen Umfang verteilt sind, die dazu bestimmt sind, Mittel zur Befestigung (60) am Halter (15) aufzunehmen.

8. Elektrische Maschine nach einem der vorhergehenden Ansprüche, **dadurch gekennzeichnet, dass** der Sensorträger (54) eine Basis (540) in Form eines radialen Ringes aufweist, die mit mindestens einem Abschnitt (541) versehen ist, der von der Basis (540) absteht, der den Sensor (52) enthält.

9. Elektrische Maschine nach einem der vorhergehenden Ansprüche, **dadurch gekennzeichnet, dass** der Sensor (52) gegenüber der Innenfläche des Zielträgers (57) positioniert ist, auf welcher das magnetische Ziel (55) befestigt ist.

10. Getriebeanordnung aufweisend eine drehende elektrische Maschine (10) nach einem der Ansprüche 1 bis 9, die zwischen einerseits einer Kupplung, die einem Schwungrad in Verbindung mit einer Verbrennungsmotor-Kurbelwelle zugeordnet ist, und andererseits einem Torsionsdämpfer in Verbindung mit einem Getriebeeingang eines Kraftfahrzeugs angeordnet ist.

## Claims

1. Rotating electrical machine (10) comprising:
- a rotor (12) linked in rotation with a shaft (13),
- a stator (11) comprising a winding,
- a sensor-holder (54) positioned around a sleeve (42) made from a support (15) of said electrical machine (10) and
- means (51) for tracking an angular position of said rotor (12) comprising at least one sensor (52) and a magnetic target (55) fixed onto a target-holder (57), said target-holder (57) is mounted on said shaft (13) and in that said magnetic target (55) is fixed onto an internal face of said target-holder (57) turned towards said shaft (13) of said electrical machine (10),
said rotor (12) is mounted on a hub (25) linked in rotation with said shaft (13) of the electrical machine, said magnetic target (55), said target-holder (57) and said sensor (52) are positioned inside said hub (25), **characterized in that** said sleeve (42) ensures that a rolling bearing (18) mounted between said sleeve (42) and said shaft (13) of the electrical machine (10) is radially secured.

2. Electrical machine according to Claim 1, **characterized in that** said tracking means (51) comprise three sensors (52).

3. Electrical machine according to Claim 1 or 2, **characterized in that** said target-holder (57) has a cup form.

4. Electrical machine according to any one of Claims 1 to 3, **characterized in that** said target-holder (57) is formed from a stamped metal sheet.

5. Electrical machine according to Claim 1, **characterized in that** said sensor-holder (54) has an internal diameter substantially equal to an external diameter of said sleeve (42).

6. Electrical machine according to Claim 5, **characterized in that** said sensor-holder (54) is fixed onto a transverse wall (43) of said support (15).

7. Electrical machine according to any one of the preceding claims, **characterized in that** said sensor-holder (54) of annular form comprises oblong holes (542) distributed over its circumference intended to receive means (60) for fixing to said support (15).

8. Electrical machine according to any one of the preceding claims, **characterized in that** said sensor-holder (54) has a base (540) in the form of a radial ring provided with at least one portion (541) protruding relative to the base (540) incorporating said sensor (52) .

9. Electrical machine according to any one of the preceding claims, **characterized in that** said sensor (52) is positioned facing the internal face of the target-holder (57) to which the magnetic target (55) is fixed.

10. Transmission assembly comprising a rotating electrical machine (10) defined according to any one of Claims 1 to 9, interposed between, on the one hand, a clutch associated with a damping flywheel connected with a heat engine crankshaft, and, on the other hand, a torsion damper connected with a gearbox input of a motor vehicle.
